# EUROPEAN PATENT APPLICATION

(11) **EP 4 656 470 A1**
(43) Date of publication of application: **03.12.2025**
(21) Application number: 24178266.3
(22) Date of filing: 27.05.2024
(51) Int. Cl.: B60T 1/093, B60T 1/10, F16D 57/06, F16D 61/00

(54) **A BRAKING UNIT**

(71) Applicant: VOLVO TRUCK CORPORATION, 405 08 Göteborg (SE)
(72) Inventor: LUNDGREN, Staffan, 438 53 HINDÅS (SE)
(74) Representative: Ström & Gulliksson AB

(57) **Abstract**

The present disclosure relates to a braking unit (**1**) for a fuel cell electric vehicle (**100**) having a propulsion drive shaft (**2**) or a differential wheel, comprising a hydraulic motor or a rotary gear pump (**3**) connected with the propulsion drive shaft (**2**) or the differential wheel, the hydraulic motor or the rotary gear pump (**3**) is fluidly connected with a heat exchanger (**4**), a restriction valve (**5**) configured to control a flow of a fluid in and out of the hydraulic motor or the rotary gear pump (**3**), wherein a hydraulic compressor motor (**6**) is arranged between the hydraulic motor or the rotary gear pump (**3**) and the restriction valve (**5**), the hydraulic compressor motor (**6**) is operatively connected with an air compressor (**7**).

## Description

### TECHNICAL FIELD

The disclosure relates generally to braking of an electric vehicle. In particular aspects, the disclosure relates to a braking unit. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Braking in electric vehicles (EVs), including battery electric vehicles (BEVs) and fuel cell electric vehicles (FCEVs), presents unique challenges compared to conventional internal combustion engine vehicles. In the field of EVs, regenerative braking is a common feature that captures the vehicle's kinetic energy during deceleration and converts it back into electrical energy, which can then be stored in the battery. This process not only conserves energy but also reduces the wear on the mechanical braking system. However, there are situations where regenerative braking alone is insufficient and can lead to problems.

One of the critical issues arises during steep hill descents. In such scenarios, the continuous application of brakes can lead to overheating due to the prolonged generation of thermal energy, which conventional regenerative systems are not designed to handle. This overheating can compromise brake performance and lead to potential safety risks. Moreover, the effectiveness of regenerative braking is also limited when the vehicle's battery is fully charged, as the system cannot store excess energy, necessitating a reliance on the mechanical brakes that could be prone to overheating.

### SUMMARY

According to a first aspect of the disclosure, braking unit for a fuel cell electric vehicle having a propulsion drive shaft or a differential wheel, comprising a hydraulic motor or a rotary gear pump connected with the propulsion drive shaft or the differential wheel, the hydraulic motor or the rotary gear pump is fluidly connected with a heat exchanger, a restriction valve configured to control a flow of a fluid in and out of the hydraulic motor or the rotary gear pump, wherein a hydraulic compressor motor is arranged between the hydraulic motor or the rotary gear pump and the restriction valve, the hydraulic compressor motor is operatively connected with an air compressor. The first aspect of the disclosure may seek to solve the disadvantages with the prior solutions during different braking processes of an electric vehicle. A technical advantage may include enhanced cooling capabilities, which are crucial for maintaining optimal operating temperatures and preventing overheating during prolonged or intense braking. In addition, a cost effective brake solution for electric vehicles with small battery usage is obtained.

Optionally in some examples, including in at least one preferred example, the restriction valve is arranged between the hydraulic compressor motor and the heat exchanger. A technical advantage may include optimized fluid flow that ensures the heat exchanger is utilized efficiently for maximum cooling effect, thereby sustaining the performance of the braking system.

Optionally in some examples, including in at least one preferred example, a hydraulic bypass valve is arranged between the hydraulic motor or the rotary gear pump and the hydraulic compressor motor so that the hydraulic compressor motor can be bypassed. A technical advantage may include flexibility in the hydraulic system's operation, allowing for adjustments based on specific performance needs or conditions, which enhances the system's overall efficiency and effectiveness.

Optionally in some examples, including in at least one preferred example, a fluid reservoir providing the fluid to hydraulic motor or the rotary gear pump via the restriction valve. A technical advantage may include a steady and reliable supply of fluid, essential for the consistent operation of the hydraulic system and avoiding performance degradation over time.

Optionally in some examples, including in at least one preferred example, the heat exchanger is an air heat exchanger, the heat exchanger is configured to cool the fluid. A technical advantage may include the effective dissipation of heat from the hydraulic fluid, which is vital for maintaining system integrity and performance under thermal stress.

Optionally in some examples, including in at least one preferred example, the fluid is oil. A technical advantage may include the use of oil which has excellent lubrication properties and thermal stability, contributing to the longevity and reliability of the hydraulic components.

Optionally in some examples, including in at least one preferred example, a gear box is arranged between the hydraulic compressor motor and the air compressor. A technical advantage may include increased mechanical efficiency and the effective transmission of power between components, which enhances the overall functionality of the braking system.

Optionally in some examples, including in at least one preferred example, the gearbox is a high speed gearbox, at least having a gear ratio of. A technical advantage may include optimized speed and torque management, facilitating smoother and more efficient operation of the connected hydraulic and air compressor systems.

Optionally in some examples, including in at least one preferred example, an air restriction valve is arranged between the air compressor and the heat exchanger. A technical advantage may include controlled air flow which is crucial for maintaining the desired thermal conditions within the system, thereby enhancing the efficiency of the heat exchanger.

Optionally in some examples, including in at least one preferred example, the air compressor is connected with the gearbox and the hydraulic compressor motor. A technical advantage may include streamlined integration of components which leads to compact system design and reduced mechanical losses.

Optionally in some examples, including in at least one preferred example, the air compressor is driven by the hydraulic compressor motor, optionally via the gear box. A technical advantage may include efficient power utilization and reduced energy wastage, which can be crucial for maintaining the energy efficiency of the vehicle.

Optionally in some examples, including in at least one preferred example, the air compressor has an inlet and an outlet. A technical advantage may include effective management of air flow, which is essential for optimal operation of the air compressor and maintaining system pressure balance.

Optionally in some examples, including in at least one preferred example, the air restriction valve is arranged between the outlet and the heat exchanger. A technical advantage may include precise control over air discharge, crucial for optimizing the cooling process and preventing potential overheating.

Optionally in some examples, including in at least one preferred example, a control unit is configured to control the restriction valve, the hydraulic compressor motor, the bypass valve and/or the air restriction valve. A technical advantage may include centralized control, which simplifies system management and enhances the responsiveness of the braking system to dynamic driving conditions.

Optionally in some examples, including in at least one preferred example, the control unit is configured to control the restriction valve, the hydraulic compressor motor, the bypass valve and/or the air restriction valve on basis of an input from an operator. A technical advantage may include user-driven customization of braking dynamics, allowing for personalized vehicle handling and improved driving experience.

Optionally in some examples, including in at least one preferred example, the input is a braking force. A technical advantage may include direct responsiveness to driver inputs, ensuring that the braking system reacts appropriately to real-time driving demands for safety and performance.

Optionally in some examples, including in at least one preferred example, a temperature sensor is arranged for detecting a temperature of the fluid. A technical advantage may include continuous monitoring of fluid temperature, which is critical for preventing thermal overload and ensuring reliable operation of the braking system.

Optionally in some examples, including in at least one preferred example, the temperature sensor is operatively connected with the control unit. A technical advantage may include integrated temperature feedback, which allows for automated adjustments to the braking system based on real-time thermal data, enhancing system reliability and performance.

Optionally in some examples, including in at least one preferred example, the control unit is configured to control the heat exchanger and/or the air compressor/air restriction valve on basis of the detected temperature. A technical advantage may include adaptive thermal management, which helps in maintaining optimal operating temperatures and preventing damage due to overheating.

Optionally in some examples, including in at least one preferred example, the control unit is configured to activate the air compressor when the fluid exceed a predetermined temperature. A technical advantage may include proactive cooling measures, which are essential for maintaining thermal balance and ensuring the longevity of the hydraulic components.

Optionally in some examples, including in at least one preferred example, the control unit is configured to activate the by-pass valve when the fluid is below a predetermined temperature. A technical advantage may include energy-efficient operation, as unnecessary cooling is avoided, thereby conserving power and optimizing system performance.

According to a second aspect of the disclosure, a fuel cell electric vehicle comprising a braking unit. The second aspect of the disclosure may seek to the disadvantages with the prior solutions during different braking processes of an electric vehicle. A technical advantage may include enhanced braking capabilities specifically tailored for the unique requirements of fuel cell electric vehicles, contributing to their operational efficiency and safety.

According to a third aspect of the disclosure, a battery electric vehicle comprising a braking unit. The third aspect of the disclosure may seek to the disadvantages with the prior solutions during different braking processes of an electric vehicle. A technical advantage may include the integration of advanced hydraulic braking systems that complement the electric drive components, enhancing vehicle control and safety.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary of a braking unit according to an example.
**FIG. 2** is an exemplary of a vehicle having a braking unit.
**FIG. 3** is another view of **FIG. 1****,** according to an example.

### DETAILED DESCRIPTION

The detailed description set forth below provides information and examples of the disclosed technology with sufficient detail to enable those skilled in the art to practice the disclosure.

Another limitation of current regenerative systems is that they are often integrated with complex electronic and electro-hydraulic components, which can make the systems not only costly but also bulky and potentially less reliable due to their complexity. Additionally, the reliance on these advanced systems can limit their applicability across different vehicle platforms, especially when considering the cost-sensitivity of automotive markets.

Furthermore, the transition between regenerative and mechanical braking can create non-linear braking dynamics, which may lead to a less intuitive and potentially less safe driving experience, especially during emergency braking scenarios or in conditions that require fine control over the braking force, such as on slippery or uneven road surfaces.

The prior art also suggests that while regenerative braking systems contribute to energy conservation, they still require significant energy for their control systems, including DC/DC converters and electric motor controls, which can be expensive. Moreover, the weight and space occupied by these components can be substantial, affecting the vehicle design and efficiency.

The disadvantages outlined above highlight the need for an alternative braking solution that can effectively complement or substitute regenerative braking systems in EVs. Such a solution should ideally provide high power density, cost-effectiveness, and the ability to handle intense and prolonged braking events without overheating. It should also offer a more seamless transition between different braking modes to ensure consistent and predictable vehicle handling. The industry would benefit from a more robust and simplified system that could easily be integrated into existing vehicle platforms, enhancing the overall safety and performance of EVs, particularly in challenging driving conditions where regenerative systems fall short.

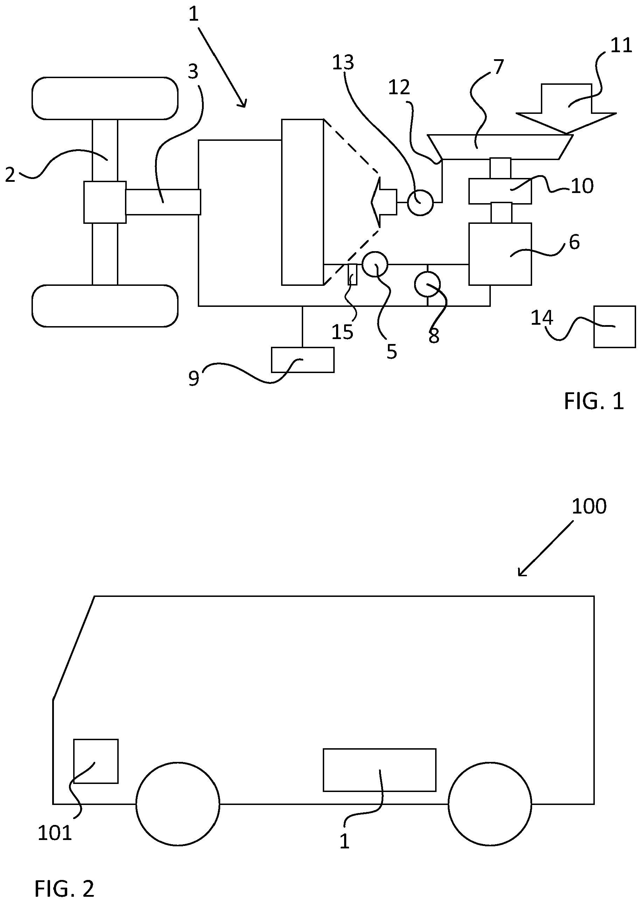

**FIG. 1** is an exemplary braking unit 1 according to an example. The braking unit **1** is configured for a fuel cell electric vehicle or a battery electric vehicle having a propulsion drive shaft **2** or a differential wheel. The braking unit **1** comprises a hydraulic motor or a rotary gear pump **3** connected with the propulsion drive shaft **2** or the differential wheel. In the example, the vehicle comprises the propulsion drive shaft **2** and the rotary gear pump **3** is connected with the drive shaft **2.** In another example, the vehicle may comprise a differential wheel, and the differential wheel may be connected with the hydraulic motor. Other combinations is also feasible within the disclosure.

The hydraulic motor or the rotary gear pump **3** is fluidly connected with a heat exchanger **4.** The heat exchanger **4** is configured to cool a fluid flowing from the hydraulic motor or rotary gear pump **3** through the heat exchanger **4.** The heat exchanger **4** may be an air-to-fluid heat exchanger where an air flow is guided through the heat exchanger **4** for cooling the fluid being circulated within the heat exchanger **4.** Furthermore, a restriction valve **5** is configured to control a flow of a fluid in and out of the hydraulic motor or the rotary gear pump **5.** In the present example, the restriction valve **5** is arranged between the rotary gear pump **3** and the heat exchanger **4.** In addition, a hydraulic compressor motor **6** is arranged between the hydraulic motor or the rotary gear pump **3** and the restriction valve **5,** the hydraulic compressor motor **6** is operatively connected with an air compressor **7.** The hydraulic compressor motor **6** is configured to control an air flow via the air compressor **7.** Hereby, the braking is done by both the restriction valve and the work of the hydraulic compressor motor, so that the brake events may be tuned to better address transients and operation modes of the vehicle. The present disclosure enables improved heat management through efficient transfer and dissipation of heat, enhancing the reliability and performance of the braking system under various operational stresses. Furthermore, precise control over the fluid dynamics, which can lead to more responsive braking actions and better handling of the vehicle during critical braking scenarios is obtained, and the ability to modulate pressure more finely within the hydraulic system, which can contribute to a smoother and more controlled braking process. Also, an enhanced cooling capabilities, which are crucial for maintaining optimal operating temperatures and preventing overheating during prolonged or intense braking is obtained.

Furthermore, the restriction valve **5** may be arranged between the hydraulic compressor motor **6** and the heat exchanger **4** as shown in **FIG. 1****.**

Moreover, a hydraulic bypass valve **8** is arranged between the hydraulic motor or the rotary gear pump **3** and the hydraulic compressor motor **6** so that the hydraulic compressor motor **6** can be bypassed. For lower brake power need the hydraulic compressor motor **6** can be bypassed (not actuated) to only restrict the fluid flow, and to allow the fluid to heat exchanger **4** to work without a forced airflow by the hydraulic compressor motor 6.

The braking unit **1** may also comprise a fluid reservoir **9** providing the fluid to hydraulic motor or the rotary gear pump **3** via the restriction valve **5.** The fluid may be oil.

In addition, a gear box **10** may be arranged between the hydraulic compressor motor **6** and the air compressor **7.** The gearbox **10** may be a high speed gearbox, at least having a gear ratio of 1 :10-15. The air compressor **7** is connected with the gearbox **10** and the hydraulic compressor motor **6.** In the present example, the air compressor **7** is driven by the hydraulic compressor motor **6** via the gear box **10.** In another example, the hydraulic compressor motor **6** may be directly connected with the air compressor **7.**

The air compressor **7** has an inlet **11** and an outlet **12,** the air enters into the air compressor **7** via the inlet **11** as depicted with the large arrow. In the air compressor **7,** the air may be force to have a higher flow so that enhanced cooling capabilities may be obtained.

An air restriction valve **13** may be arranged between the air compressor **7** and the heat exchanger **4.** The air restriction valve **13** is arranged between the outlet **12** and the heat exchanger **4.**

By the present disclosure, the braking is done by both the oil restriction valve **5** and sometime the air restriction valve **13,** and the work of the hydraulic compressor motor **6,** so that the brake events could be tuned to better address transients and operation modes. For lower brake power need the hydraulic compressor motor can be bypassed (not actuated) to only restrict the oil flow, and to allow the oil to the heat exchanger to work without a forced airflow by the air compressor **7.**

At higher brake need the initial fraction of the brake process could be used without engaging the air compressor **7** and later in the braking process when the oil/fluid need additional cooling, the brake work could be distributed between the work for drive of the air compressor **7** and the oil restriction valve **5,** and the hydraulic compressor motor **6,** yielding a better cooling of the oil in the circuit by forced air through the heat exchanger **4,** to prevent over heating of the hydraulic oil during heavy braking.

In addition, the braking unit **1** comprises a control unit **14** being configured to control the restriction valve **5,** the hydraulic compressor motor **6,** the bypass valve **8** and/or the air restriction valve **13.** The control unit **13** is configured to control the restriction valve **5,** the hydraulic compressor motor **6,** the bypass valve **8** and/or the air restriction valve **13** on basis of an input from an operator. The input may be a braking force.

The control unit **13** may include a microprocessor, microcontroller, programmable digital signal processor or another programmable device. The control unit **13** may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

The braking unit **1** also comprises a temperature sensor **15.** The temperature sensor **15** is arranged for detecting a temperature of the fluid in the circuitry. In **FIG. 1****,** the temperature sensor **15** is arranged upstream the heat exchanger **4,** however, it may as well be arranged at other positions. Also, a plurality of temperature sensors may be arranged at different positions. The temperature sensor **15** is operatively connected with the control unit **14.**

The control unit **14** is configured to control the heat exchanger **4** and/or the air compressor **7**/air restriction valve **13** on basis of the detected temperature from the temperature sensor **15.** Also, the control unit **14** is configured to activate the air compressor **7** via the hydraulic compressor motor **6** when the oil/fluid exceed a predetermined temperature.

The control unit **14** may also be configured to activate the by-pass valve **8** when the fluid is below a predetermined temperature.

The present disclosure also relates to a fuel cell electric vehicle **100** comprising a braking unit **1** as described above.

The present disclosure also relates to a battery electric vehicle **100** comprising a braking unit **1** as described above.

The vehicle **100** may comprises an input device **101** which may be activated by the operator of the vehicle **100.** The input device **101** may indicate a braking force for the vehicle **100.** In another example, the input device 101 may be activated automatically.

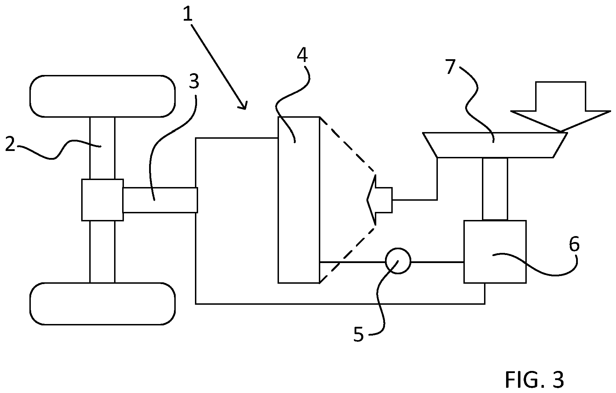

**FIG. 3** is another view of **FIG. 1****,** according to an example. In **FIG. 3****,** a braking unit **1** for a fuel cell electric vehicle having a propulsion drive shaft **2** or a differential wheel, is shown. The braking unit **1** comprising
a hydraulic motor or a rotary gear pump **3** connected with the propulsion drive shaft **2** or the differential wheel, the hydraulic motor or the rotary gear pump **3** is fluidly connected with a heat exchanger **4,**
a restriction valve **5** configured to control a flow of a fluid in and out of the hydraulic motor or the rotary gear pump **3,**
wherein a hydraulic compressor motor **6** is arranged between the hydraulic motor or the rotary gear pump **3** and the restriction valve **5,**
the hydraulic compressor motor **6** is operatively connected with an air compressor **7.**

Certain aspects and variants of the disclosure are set forth in the following examples numbered consecutive below.

Example 1.: A braking unit **(1)** for a fuel cell electric vehicle **(100)** having a propulsion drive shaft **(2)** or a differential wheel, comprising
a hydraulic motor or a rotary gear pump **(3)** connected with the propulsion drive shaft **(2)** or the differential wheel, the hydraulic motor or the rotary gear pump **(3)** is fluidly connected with a heat exchanger **(4),**
a restriction valve **(5)** configured to control a flow of a fluid in and out of the hydraulic motor or the rotary gear pump **(3),**
wherein a hydraulic compressor motor **(6)** is arranged between the hydraulic motor or the rotary gear pump **(3)** and the restriction valve **(5),**
the hydraulic compressor motor **(6)** is operatively connected with an air compressor **(7).**

Example 2: The braking unit **(1)** of example 1, wherein the restriction valve **(5)** is arranged between the hydraulic compressor motor **(6)** and the heat exchanger **(4).**

Example 3: The braking unit **(1)** of any of the examples 1-2, wherein a hydraulic bypass valve **(8)** is arranged between the hydraulic motor or the rotary gear pump **(3)** and the hydraulic compressor motor **(6)** so that the hydraulic compressor motor **(6)** can be bypassed.

Example 4: The braking unit **(1)** of any of the examples 1-3, further comprising a fluid reservoir **(9)** providing the fluid to hydraulic motor or the rotary gear pump **(3)** via the restriction valve **(5).**

Example 5: The braking unit **(1)** of any of the examples 1-4, wherein the heat exchanger **(4)** is an air heat exchanger, the heat exchanger is configured to cool the fluid.

Example 6: The braking unit **(1)** of example 4, wherein the fluid is oil.

Example 7: The braking unit **(1)** of any of the examples 1-6, wherein a gear box (10) is arranged between the hydraulic compressor motor **(6)** and the air compressor **(7).**

Example 8: The braking unit **(1)** of example 7, wherein the gearbox **(10)** is a high speed gearbox, at least having a gear ratio of 1: 10-15.

Example 9: The braking unit **(1)** of any of the examples 1-8, wherein an air restriction valve **(13)** is arranged between the air compressor **(7)** and the heat exchanger **(4).**

Example 10: The braking unit **(1)** of any of the examples 1-9, wherein the air compressor **(7)** is connected with the gearbox **(10)** and the hydraulic compressor motor **(6).**

Example 11: The braking unit **(1)** of example 10, wherein the air compressor **(7)** is driven by the hydraulic compressor motor **(6),** optionally via the gear box **(10).**

Example 12: The braking unit **(1)** of any of the examples 1-11, wherein the air compressor **(7)** has an inlet **(11)** and an outlet **(12).**

Example 13: The braking unit **(1)** of example 12, wherein the air restriction valve (13) is arranged between the outlet **(12)** and the heat exchanger **(4).**

Example 14: The braking unit **(1)** of any of the examples 1-13, wherein a control unit **(14)** is configured to control the restriction valve **(5),** the hydraulic compressor motor **(6),** the bypass valve **(8)** and/or the air restriction valve **(13).**

Example 15: The braking unit **(1)** of example 14, wherein the control unit **(14)** is configured to control the restriction valve **(5),** the hydraulic compressor motor **(6),** the bypass valve **(8)** and/or the air restriction valve **(13)** on basis of an input from an operator.

Example 16: The braking unit **(1)** of example 15, wherein the input is a braking force.

Example 17: The braking unit **(1)** of any of the examples 1-16, wherein a temperature sensor **(15)** is arranged for detecting a temperature of the fluid.

Example 18: The braking unit **(1)** of example 17, wherein the temperature sensor (15) is operatively connected with the control unit **(14).**

Example 19: The braking unit **(1)** of example 18, wherein the control unit **(14)** is configured to control the heat exchanger **(4)** and/or the air compressor **(7)**/air restriction valve **(13)** on basis of the detected temperature.

Example 20: The braking unit **(1)** of example 19, wherein the control unit **(14)** is configured to activate the air compressor **(7)** and/or the air restriction valve **(13)** when the fluid exceed a predetermined temperature.

Example 21: The braking unit **(1)** of example 19, wherein the control unit **(14)** is configured to activate the by-pass valve **(8)** when the fluid is below a predetermined temperature.

Example 22: A fuel cell electric vehicle **(100)** comprising a braking unit **(1)** of any of the examples 1-21.

Example 23: A battery electric vehicle **(100)** comprising a braking unit **(1)** of any of the examples 1-21.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A braking unit **(1)** for a fuel cell electric vehicle **(100)** having a propulsion drive shaft **(2)** or a differential wheel, comprising
a hydraulic motor or a rotary gear pump **(3)** connected with the propulsion drive shaft **(2)** or the differential wheel, the hydraulic motor or the rotary gear pump **(3)** is fluidly connected with a heat exchanger **(4),**
a restriction valve **(5)** configured to control a flow of a fluid in and out of the hydraulic motor or the rotary gear pump **(3),**
wherein a hydraulic compressor motor **(6)** is arranged between the hydraulic motor or the rotary gear pump **(3)** and the restriction valve **(5),**
the hydraulic compressor motor **(6)** is operatively connected with an air compressor **(7).**

2. The braking unit **(1)** of claim 1, wherein a hydraulic bypass valve **(8)** is arranged between the hydraulic motor or the rotary gear pump **(3)** and the hydraulic compressor motor (6) so that the hydraulic compressor motor **(6)** can be bypassed.

3. The braking unit **(1)** of any of the claims 1-2, wherein a gear box **(10)** is arranged between the hydraulic compressor motor **(6)** and the air compressor **(7).**

4. The braking unit **(1)** of any of the claims 1-3, wherein an air restriction valve **(13)** is arranged between the air compressor **(7)** and the heat exchanger **(4).**

5. The braking unit **(1)** of any of the claims 1-4, wherein the air compressor **(7)** is connected with the gearbox **(10)** and the hydraulic compressor motor **(6).**

6. The braking unit **(1)** of any of the claims 1-5, wherein a control unit **(14)** is configured to control the restriction valve **(5),** the hydraulic compressor motor **(6),** the bypass valve **(8)** and/or the air restriction valve **(13).**

7. The braking unit **(1)** of claim 6 wherein the control unit **(14)** is configured to control the restriction valve **(5),** the hydraulic compressor motor **(6),** the bypass valve **(8)** and/or the air restriction valve **(13)** on basis of an input from an operator.

8. The braking unit **(1)** of claim 7, wherein the input is a braking force.

9. The braking unit **(1)** of any of the claims 1-8, wherein a temperature sensor **(15)** is arranged for detecting a temperature of the fluid.

10. The braking unit **(1)** of claim 9, wherein the temperature sensor **(15)** is operatively connected with the control unit **(14).**

11. The braking unit **(1)** of claim 10, wherein the control unit **(14)** is configured to control the heat exchanger **(4)** and/or the air compressor **(7)**/air restriction valve **(13)** on basis of the detected temperature.

12. The braking unit **(1)** of claim 10, wherein the control unit **(14)** is configured to activate the air compressor **(7)** and/or the air restriction valve **(13)** when the fluid exceed a predetermined temperature.

13. The braking unit **(1)** of claims 10, wherein the control unit **(14)** is configured to activate the by-pass valve **(8)** when the fluid is below a predetermined temperature.

14. A fuel cell electric vehicle **(100)** comprising a braking unit **(1)** of any of the claims 1-12.

15. A battery electric vehicle **(100)** comprising a braking unit **(1)** of any of the claims 1-12.
